# EUROPÄISCHE PATENTSCHRIFT

(11) **EP 3 915 354 B1**
(45) Veröffentlichungstag und Bekanntmachung des Hinweises auf die Patenterteilung: **10.05.2023**
(21) Anmeldenummer: 21161998.6
(22) Anmeldetag: 11.03.2021
(51) Int. Cl.: A01D 41/12, A01D 41/127, A01D 69/00

(54) **ENTLEERSYSTEM FÜR EINE LANDWIRTSCHAFTLICHE ARBEITSMASCHINE**
UNLOADING SYSTEM FOR AN AGRICULTURAL WORKING MACHINE
SYSTÈME DE VIDANGE POUR UNE MACHINE DE TRAVAIL AGRICOLE

(30) Priorität: 27.05.2020 DE 102020114206
(43) Veröffentlichungstag der Anmeldung: 01.12.2021
(73) Patentinhaber: CLAAS Selbstfahrende Erntemaschinen GmbH, 33428 Harsewinkel (DE)
(72) Erfinder: Claes, Ulrich, 33790 Halle/Westf. (DE)
(74) Vertreter: CLAAS Gruppe

(56) Entgegenhaltungen:
- EP-A1- 2 123 510
- EP-A1- 2 952 085
- EP-A2- 2 604 105
- WO-A1-2019/040413
- CN-U- 207 321 982
- RU-U1- 193 357
- US-A1- 2014 169 932

## Beschreibung

Die vorliegende Erfindung betrifft ein Entleersystem für eine landwirtschaftliche Arbeitsmaschine gemäß dem Oberbegriff des Anspruches 1.

Ein Entleersystem für eine landwirtschaftliche Arbeitsmaschine umfasst ein Erntegutspeicherbehältnis zur temporären Aufnahme von Erntegut, welches während eines Erntevorgangs auf einem Feld aufgenommen wird. Im tiefstgelegenen Bereich innerhalb des Erntegutspeicherbehältnisses ist zumindest eine Querförderschnecke angeordnet, mittels der das im Erntegutspeicherbehältnis befindliche Erntegut einem Auslaufrohrstrang mit einem unter einem Winkel zu der zumindest einen Querförderschnecke geneigt angeordnetem Vertikalrohr und einem sich an das Vertikalrohr anschließenden Auslaufrohr zugeführt wird. In dem Auslaufrohrstrang sind Förderschnecken angeordnet. Die zumindest eine Querförderschnecke und die Förderschnecken des Auslaufrohrstrangs werden oftmals durch ein gemeinsames Getriebe angetrieben, so dass alle Schnecken gemeinsam ein- und ausgeschaltet werden. Eine generelle Reduzierung der Entleerrate, beispielsweise bei der Reisernte, wird durch den Umbau auf Querförderschnecken mit reduzierter Steigung dargestellt. Alternativ wird eine Verringerung der Entleerrate über das Verstellen der Zulauföffnung über der Querförderschnecke im Erntegutspeicherbehältnis erreicht. Dies erfolgt durch eine manuelle Verstellung von Abdeckblechen, welche die Querförderschnecke teilweise abdeckt. Das Anpassen der Entleerrate des Entleersystems ist sehr aufwendig und unflexibel.

Aus der EP 2 123 510 A1 sowie der WO 2019/040413 A1 sind gattungsgemäße Entleersysteme bekannt, welche ein Antriebssystem zum stufenlos drehzahlveränderlichen Antreiben der zumindest einen Querförderschnecke sowie eine Steuerungsvorrichtung zur Ansteuerung des Antriebssystems aufweisen.

Der Erfindung liegt das Problem zu Grunde, das bekannte Entleersystem für eine landwirtschaftliche Erntemaschine derart auszugestalten und weiterzubilden, dass dieses einen flexiblen Betrieb ermöglicht und dabei bauraumsparend ausgeführt ist.

Das vorstehende Problem wird bei einem Entleersysteme gemäß dem Oberbegriff von Anspruch 1 durch die Merkmale des kennzeichnenden Teils von Anspruch 1 gelöst.

Gemäß dem Anspruch 1 wird ein Entleersystem für eine landwirtschaftliche Arbeitsmaschine vorgeschlagen, umfassend:
- ein Erntegutspeicherbehältnis,
- zumindest eine innerhalb des Erntegutspeicherbehältnisses angeordnete Querförderschnecke,
- einen Auslaufrohrstrang mit einem unter einem Winkel zu der zumindest einen Querförderschnecke geneigt angeordnetem Vertikalrohr und einem sich an das Vertikalrohr anschließenden Auslaufrohr, wobei in dem Auslaufrohrstrang Förderschnecken angeordnet sind, wobei zur Entleerung des Erntegutspeicherbehältnisses den Förderschnecken mittels der zumindest einen Querförderschnecke im Erntegutspeicherbehältnis befindliches Erntegut zugeführt wird,
- ein Antriebssystem zum stufenlos drehzahlveränderlichen Antreiben der zumindest einen Querförderschnecke, sowie
- eine Steuerungsvorrichtung zur Ansteuerung des Antriebssystems.

Um einen flexibleren Betrieb des Entleersystems zu ermöglichen, ist erfindungsgemäß vorgesehen, dass das Antriebssystem einen Förderschneckenantriebsstrang zum Antreiben der Förderschnecken im Auslaufrohrstrang und ein Antriebsmittel zum Antreiben der zumindest einen Querförderschnecke umfasst, wobei der Förderschneckenantriebsstrang und das Antriebsmittel auf einander gegenüberliegenden Seiten des Erntegutspeicherbehältnisses angeordnet sind, wobei auf der Seite des Förderschneckenantriebsstrangs eine Hydraulikpumpe angeordnet ist, welche das als zumindest ein Hydraulikmotor ausgebildete Antriebsmittel stufenlos drehzahlveränderlich antreibt. Mittels des Hydraulikmotors lässt sich die zumindest eine Querförderschnecke stufenlos drehzahlveränderlich antreiben, wodurch eine flexible Einstellung von Entleerraten ermöglicht wird. Das Erntegutspeicherbehältnis ist vollständig entleerbar, da der Antrieb der zumindest einen Querförderschnecke und der Förderschnecken im Auslaufrohrstrang entkoppelt sind. So lassen sich über den stufenlos drehzahlgesteuerten Antrieb der Querförderschnecken variable Entleerraten, wie eine stufenlose Veränderung, d.h. Reduzierung und Erhöhung, der Entleerrate für verschiedene Einsatzfälle während des Entleervorgangs einstellen. Für eine Restbefüllung eines Überladefahrzeug als auch bei kleinen Überladefahrzeugen mit einem geringen Ladevolumen ist ein langsames, gezielteres Überladen sinnvoll, um Erntegutverluste zu vermeiden. Ebenso ist das Betreiben des Entleersystems mit einer an die Art des zu überladenden Erntegutes angepassten Entleerrate respektive Entleergeschwindigkeit vorteilhaft, wie beispielsweise bei der Reis- oder Grasernte. Ein Austausch der zumindest einen Querförderschnecke gegen eine Querförderschnecke mit reduzierter Steigung entfällt somit.

Die Anordnung des vollständigen Förderschneckenantriebsstrangs auf der einen Seite des Erntegutspeicherbehältnisses und die Anordnung des Antriebsmittels zum Antreiben der zumindest einen Querförderschnecke auf der gegenüberliegenden Seite des Erntegutspeicherbehältnisses ist besonders bauraumsparend. Gegenüber der EP 2 153 510 B1 oder der WO 2019/040413 A1, die eine Anordnung von Teilen des gemeinsamen Antriebsstranges, wie Antriebswellen, zur Erzeugung und Übertragung von Drehmoment und Drehzahl unterhalb des Erntegutspeicherbehältnisses vorsehen, steht gemäß der erfindungsgemäßen Lösung dieser Bauraum dem Erntegutspeicherbehältnis oder anderen Baugruppen der Arbeitsmaschine zur Verfügung.

Insbesondere kann die Hydraulikpumpe in den Förderschneckenantriebsstrang integriert sein. Somit wird die Hydraulikpumpe nur dann in Betrieb genommen, wenn auch der Förderschneckenantriebsstrang eingeschaltet wird. Die Hydraulikpumpe ist bevorzugt als Verstellpumpe ausgeführt.

Weiterhin kann die zumindest eine Querförderschnecke auf ihrer dem Inneren des Erntegutspeicherbehältnisses zugewandten Seite im Wesentlichen abdeckungsfrei ausgeführt sein. Hierdurch entfallen die manuell zu verstellenden Abdeckbleche im Erntegutspeicherbehältnis. Zudem ist dadurch die zumindest eine Querförderschnecke besser zugänglich.

Des Weiteren kann der zumindest eine Hydraulikmotor mittels einer Antriebsvorrichtung die zumindest eine Querförderschnecke antreiben. Bevorzugt sind insbesondere zwei Querförderschnecken in dem Erntegutspeicherbehältnis angeordnet, die von dem Hydraulikmotor mittels einer als Kettentrieb ausgeführten Antriebsvorrichtung angetrieben werden. Dabei kann an der Motorwelle des zumindest einen Hydraulikmotors ein Abtriebsritzel angeordnet sein, welches mittels einer endlos umlaufenden Kette jeweils ein Antriebsritzel antreibt, welche am freien Ende einer jeweiligen Schneckenwelle der Querförderschnecken auf der dem Förderschneckenantriebsstrang gegenüberliegenden Seite des Erntegutbehältnisses befestigt ist. Alternativ kann die Antriebsvorrichtung als Riementrieb mit einem als Zahnriemen oder als Verbundriemen ausgeführten endlos umlaufenden Antriebselement ausgeführt sein.

Vorzugsweise kann der Förderschneckenantriebsstrang ein Verteilergetriebe umfassen, welches durch einen Riemen trieblich mit einem Vorgelegepunkt verbunden ist, welcher die Förderschnecken antreibt.

Dabei kann der Vorgelegepunkt mittels eines Kettentriebes ein Winkelgetriebe antreiben, welches die im Vertikalrohr und im Auslaufrohr angeordneten Förderschnecken antreibt. Für den Antrieb nur der Förderschnecken im Auslaufrohrstrang ist ein einfaches und leichteres Getriebe, wie ein Winkelgetriebe, ausreichend.

Insbesondere kann die Steuerungsvorrichtung zur Ansteuerung der Hydraulikpumpe und/oder des zumindest einen Hydraulikmotors eingerichtet sein. So kann der zumindest eine Hydraulikmotor mit verstellbarem Schluckvolumen ausgeführt sein.

Hierbei kann die Steuerungsvorrichtung zur voneinander unabhängigen Ansteuerung des Förderschneckenantriebsstranges und der Hydraulikpumpe und/oder des zumindest einen Hydraulikmotors eingerichtet sein. Bei einer als Verstellpumpe ausgeführten Hydraulikpumpe lässt sich das Fördervolumen auf null stellen, so dass bei Inbetriebnahme des Förderschneckenantriebsstranges der zumindest eine Hydraulikmotor zum Antreiben der zumindest einen Querförderschnecke nicht angetrieben wird.

Bevorzugt kann die Steuerungsvorrichtung zur zeitversetzten Ansteuerung des Förderschneckenantriebsstranges und der Hydraulikpumpe und/oder des zumindest einen Hydraulikmotors eingerichtet sein. Hierdurch lässt sich eine Einschaltverzögerung der zumindest einen Querförderschnecke erreichen. Durch die Einschaltverzögerung wird ein schonenderes Einschaltverhalten der Förderschnecken des Auslaufrohrstranges und der zumindest einen Querförderschnecke erreicht, da die Förderschnecken im Auslaufrohrstrang bereits aktiv sind, bevor die zumindest eine Querförderschnecke zugeschaltet wird. Auf diese Weise lässt sich ein Drehmomentstoß bei einem Wiedereinschalten nach einer Notabschaltung oder einer Blockade vermeiden. Zu einem Drehmomentstoß kann es beispielsweise aufgrund einer Notabschaltung des Entleersystems kommen, bei welchem alle Schnecken abgeschaltet werden, so dass dann Erntegut in der Querförderschnecke als auch in den Förderschnecken verbleibt. Ebenso lässt sich durch die zeitversetzte Ansteuerung eine Ausschaltvoreilung der zumindest einen Querförderschnecke gegenüber den Förderschnecken erreichen. Auf diese Weise kann der Auslaufrohrstrang leergefahren werden, was zur Erleichterung beim Wiedereinschalten und zur Entlastung des Auslaufrohrstranges und dessen Förderschneckenantriebsstranges führt.

Weiter bevorzugt kann die Steuerungsvorrichtung dazu eingerichtet sein, zumindest einen Vorgabewerte für eine Entleerrate vorzugeben, wobei insbesondere der zumindest eine Vorgabewerte während des Entleervorgangs variierbar ist. Die stufenlose Veränderung (Reduzierung und Erhöhung) der Entleerrate für verschiedene Einsatzfälle innerhalb eines Einstellbereiches von Minimal- und Maximal-Vorgabewerten während des Entleervorgangs ist vorteilhaft, um eine Restbefüllung eines Überladefahrzeugs möglichst verlustfrei durchführen zu können. Ebenso lässt sich dadurch das Befüllen von Überladefahrzeug mit einem kleineren Volumen langsamer und gezielter durchführen.

Des Weiteren wird die eingangs gestellte Aufgabe durch eine landwirtschaftliche Arbeitsmaschine mit einem Entleersystem nach einem der vorangehenden Ansprüche gelöst, wobei die Arbeitsmaschine als ein Mähdrescher oder ein Überladewagen ausgeführt ist. Bei einer als Mähdrescher ausgeführten Arbeitsmaschine lässt sich das Entleersystem bevorzugt von der Kabine aus ansteuern. Hierzu kann in der Kabine des Mähdreschers eine Eingabe-Ausgabe-Einheit vorgesehen sein, welche Steuerbefehle an die Steuerungsvorrichtung übermittelt. Alternativ oder zusätzlich kann vorgesehen sein, dass die Übermittlung von Steuerbefehlen durch eine mobile Datenverarbeitungsvorrichtung erfolgt, wie beispielsweise ein Mobilfunkgerät oder dergleichen.

Die vorliegende Erfindung wird nachstehend anhand eines in den Zeichnungen dargestellten Ausführungsbeispieles näher erläutert.

Es zeigen:
- Fig. 1: eine schematische Seitenansicht einer landwirtschaftlichen Arbeitsmaschine mit einem Entleersystem;
- Fig. 2: schematisch eine perspektivische Teilansicht eines Erntegutbehältnisses der Arbeitsmaschine;
- Fig. 3A, 3B: schematisch eine seitliche Teilansicht des Erntegutbehältnisses mit einer daran angeordneten Hydraulikpumpe eines Förderschneckenantriebsstranges, wobei die Ansicht gemäß Fig. 3A eine Anordnung der Hydraulikpumpe gemäß einer ersten Ausführungsform und die Ansicht gemäß Fig. 3B eine Anordnung der Hydraulikpumpe gemäß einer zweiten Ausführungsform zeigen;
- Fig. 4: schematisch eine perspektivische Teilansicht der gegenüberliegenden Seite des Erntegutbehältnisses der Arbeitsmaschine; und
- Fig. 5: eine perspektivische Ansicht des Erntegutbehältnisses der Arbeitsmaschine in Draufsicht.

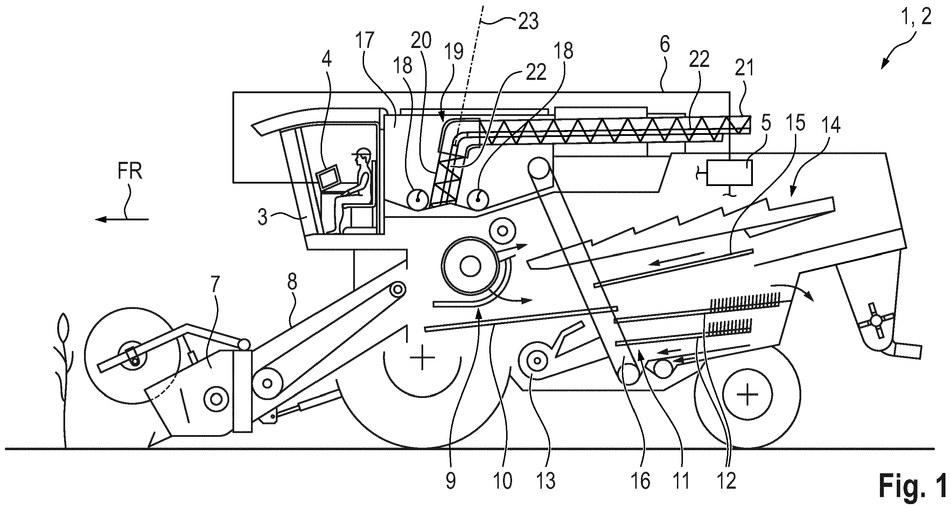

In Fig. 1 ist eine schematische Seitenansicht einer landwirtschaftlichen Arbeitsmaschine 1 mit einem Entleersystem dargestellt. Die Arbeitsmaschine 1 ist im dargestellten Ausführungsbeispiel als ein Mähdrescher 2 ausgeführt. Die Arbeitsmaschine 1 kann auch als ein Überladewagen mit dem erfindungsgemäß Entleersystem ausgeführt sein. Um einen Fahrer des Mähdreschers 2 vor belastenden Umwelteinflüssen zu schützen, ist im frontseitigen Bereich eine geschlossene Fahrerkabine 3 angeordnet. Im Inneren der Fahrerkabine 3 befindet sich eine Eingabe- Ausgabe-Einheit 4, die eine Anzeigeeinheit sowie Eingabemittel, beispielsweise in Gestalt einer Tastatur oder eines Touchscreens umfasst. Mittels der Eingabe- Ausgabe-Einheit 4 kann die Bedienung des Mähdreschers 2 durchgeführt werden. Des Weiteren weist der Mähdrescher 2 zumindest eine Steuerungsvorrichtung 5 auf, mittels der zumindest eines der nachfolgend beschriebenen Arbeitsaggregate des Mähdreschers 2 gesteuert beziehungsweise geregelt werden kann. Die Eingabe- Ausgabe-Einheit 4 ist durch eine Steuerleitung 6 mit der Steuerungsvorrichtung 5 für den bidirektionalen Datenaustausch verbunden.

Der Mähdrescher 2 nimmt ein Vorsatzgerät 7, beispielsweise ein Getreideschneidwerk, auf, welches in an sich bekannter Weise mit einem Schrägförderer 8 des Mähdreschers 2 verbunden ist. Mit dem Pfeil FR ist die Fahrrichtung des Mähdreschers 2 bezeichnet. Das Vorsatzgerät 7 übergibt das Erntegut an den Schrägförderer 8, welcher das Erntegut mittels umlaufender Fördermittel weiterfördert und in seinem obenseitigen rückwärtigen Bereich an ein Dreschwerk 9 des Mähdreschers 2 übergibt. Das Dreschwerk 9 ist üblicherweise als Mehrtrommeldrehwerk ausgeführt. In dem Dreschwerk 7 wird das Erntegut in bekannter Weise bearbeitet und in zumindest zwei Teilströme getrennt. Der erste Teilstrom besteht im Wesentlichen aus Körnern, Kurzstroh und Spreu und wird über einen Vorbereitungsboden 10 unmittelbar einer aus mehreren Siebebenen 12 bestehenden Reinigungsvorrichtung 11 zugeführt. Die Reinigungsvorrichtung 11 umfasst eine Gebläseeinheit 13, die einen die Siebebenen 12 durchsetzenden Luftstrom generiert.

Der im rückwärtigen Bereich des Dreschwerks 9 aus diesem austretende weitere, im Wesentlichen aus Stroh und einem Restkornanteil bestehende Teilstrom wird einer Abscheidevorrichtung 14 zugeführt, um den Restkornanteil abzuscheiden. Die Abscheidevorrichtung 14 kann, wie bespielhaft dargestellt, als Hordenschüttler ausgeführt sein. Alternativ kann die Abscheidevorrichtung 14 als zumindest ein Axialtrennrotor ausgeführt sein. Das von der Abscheidevorrichtung 14 abgeschiedene Restkorn wird über einen sogenannten Rücklaufboden 15 und den Vorbereitungsboden 10 an die Reinigungsvorrichtung 11 übergeben.

Ein von der Reinigungsvorrichtung 11 gereinigter Körnerstrom wird mittels eines Förderelevators 16 in ein Erntegutspeicherbehältnis 17 gefördert und dort zwischengespeichert.

Das Entleersystem umfasst neben dem Erntegutspeicherbehältnis 17 zumindest eine innerhalb des Erntegutspeicherbehältnisses 17 angeordnete Querförderschnecke 18. Vorzugsweise sind zwei Querförderschnecken 18 in dem Erntegutspeicherbehältnis 17 angeordnet. Weiterhin umfasst das Entleersystem einen Auslaufrohrstrang 19 mit einem unter einem Winkel zu der zumindest einen Querförderschnecke 18 geneigt angeordnetem Vertikalrohr 20 und einem sich an das Vertikalrohr 20 anschließenden Auslaufrohr 21, wobei in dem Auslaufrohrstrang 19 Förderschnecken 22 angeordnet sind. Das Auslaufrohr 21 ist um eine im Wesentlichen senkrechte Achse 23 schwenkbar an dem Vertikalrohr 20 angeordnet. Zur Entleerung des Erntegutspeicherbehältnisses 17 wird den Förderschnecken 22 des Auslaufrohrstranges 19 mittels der Querförderschnecken 18 im Erntegutspeicherbehältnis 17 befindliches Erntegut zugeführt.

Das Vorsatzgerät 7, der Schrägförderer 8, das Drescherwerk 9, die Abscheidevorrichtung 14, die Reinigungsvorrichtung 11 sowie die Querförderschnecken 18 und die Förderschnecken 22 bilden Arbeitsaggregate des Mähdreschers 2, welche durch die Steuerungsvorrichtung 5 ansteuerbar sind. Die vorstehende Auflistung ist dabei als nicht abschließend zu verstehen.

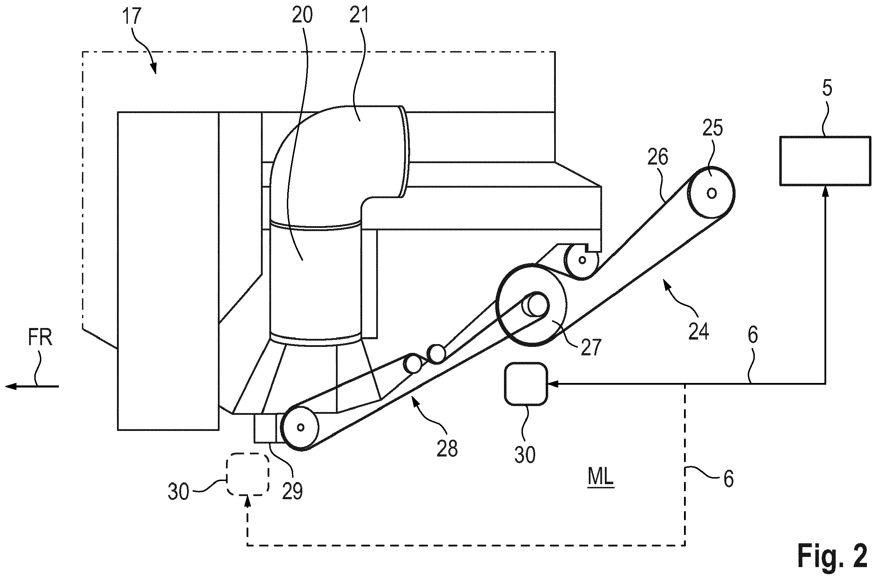

Die Darstellung in Fig. 2 zeigt schematisch eine perspektivische Teilansicht des Erntegutbehältnisses 17 der als Mähdrescher 2 ausgeführten Arbeitsmaschine 1. Die Ansicht in Fig. 2 zeigt eine aus der Perspektive des Fahrers in Fahrtrichtung FR gesehen linke Maschinenseite ML. Von dem Auslaufrohrstrang 19 sind lediglich Teile des Vertikalrohrs 20 und des Auslaufrohrs 21 dargestellt. Auf der linken Maschinenseite ML ist schematisch ein Förderschneckenantriebsstrang 24 dargestellt, der Teil des Antriebssystems des erfindungsgemäßen Entleersystems ist. Der Förderschneckenantriebsstrang 24 umfasst ein Verteilergetriebe 25, welches durch einen Riemen 26 trieblich mit einem Vorgelegepunkt 27 verbunden ist. Vom Vorgelegepunkt 27 ausgehend treibt ein Kettentrieb 28 ein Winkelgetriebe 29 an, durch welches die Förderschnecken 22 angetrieben werden. Weiterhin umfasst der Förderschneckenantriebsstrang 24 eine Hydraulikpumpe 30. Die Hydraulikpumpe 30 kann gemäß einer ersten Ausführungsform ausgehend vom Vorgelegepunkt 27 durch ein weiteres separates Antriebsmittel 40, wie einen Riementrieb oder einen Kettentrieb, angetrieben werden. Alternativ kann die Hydraulikpumpe 30 gemäß einer zweiten Ausführungsform auch durch ein modifiziertes Winkelgetriebe 29 angetrieben werden, was durch die strichlinierte Darstellung der Hydraulikpumpe 30 angedeutet ist. Die Hydraulikpumpe 30 ist bevorzugt als Verstellpumpe ausgeführt. Die Hydraulikpumpe 30 steht mittels Steuerleitung 6 mit der Steuerungsvorrichtung 5 in Verbindung, um von dieser Steuerbefehle zu empfangen und Betriebsparameter zurückzusenden.

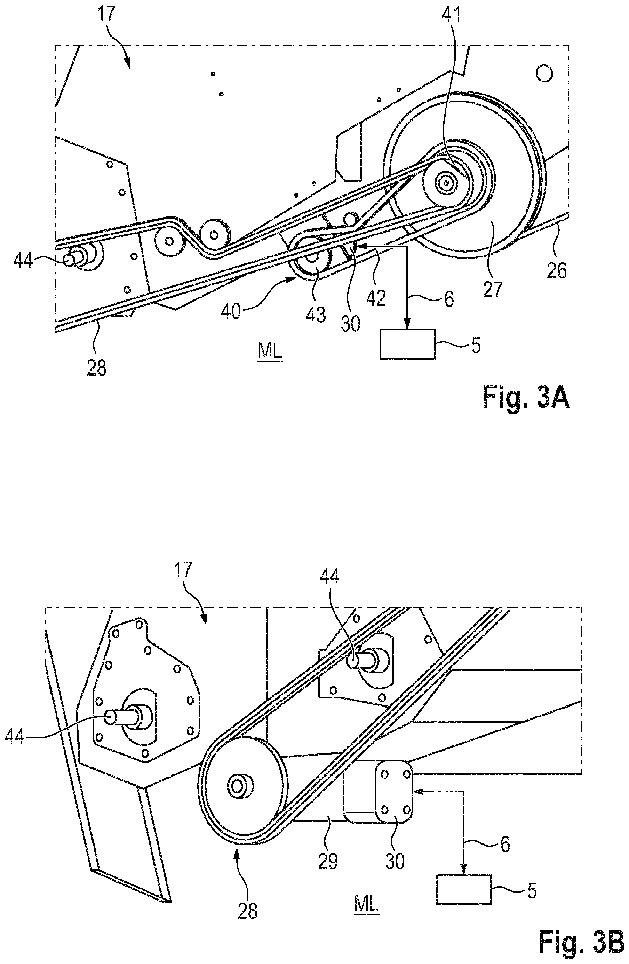

In Fig. 3A und 3B ist schematisch eine seitliche Teilansicht des Erntegutbehältnisses 17 mit der daran angeordneten Hydraulikpumpe 30 des Förderschneckenantriebsstranges 24 dargestellt, wobei die Ansicht gemäß Fig. 3A eine Anordnung der Hydraulikpumpe 30 gemäß der ersten Ausführungsform und die Ansicht gemäß Fig. 3B eine Anordnung der Hydraulikpumpe 30 gemäß der zweiten Ausführungsform zeigen. Mit 44 sind Schneckenwellen der Querförderschnecken 18 bezeichnet, von denen in den Ansichten gemäß Fig. 3 A und 3B lediglich deren Enden sichtbar sind.

Fig. 3A zeigt die auf der linken Maschinenseite ML angeordnete Hydraulikpumpe 30, welche ausgehend vom Vorgelegepunkt 27 angetrieben wird. Am Vorgelegepunkt 27 ist eine zusätzliche Abtriebsriemenscheibe 41 oder ein zusätzliches Abtriebsritzel angeordnet. Ein Riemen 42 oder eine Kette treiben eine auf der Eingangswelle der Hydraulikpumpe 30 angeordnetes Antriebsriemenscheibe 43 oder ein Antriebsritzel an.

Fig. 3B zeigt die auf der linken Maschinenseite ML angeordnete Hydraulikpumpe 30, welche alternativ durch den Kettentrieb 28 angetrieben wird. Hierzu kann die Hydraulikpumpe 30 an eine zusätzliche Abtriebswelle des modifizierten Winkelgetriebes 29 angeschlossen werden.

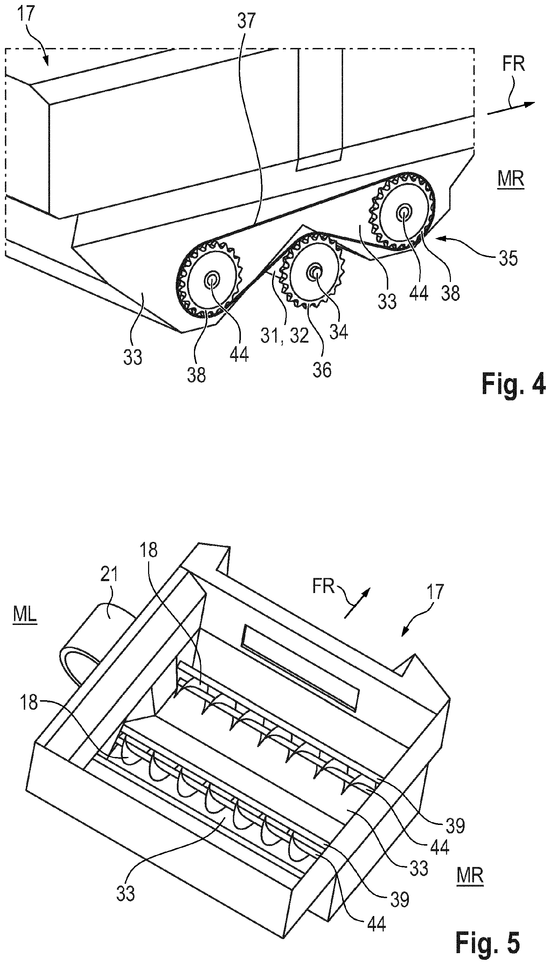

Die Darstellung in Fig. 4 zeigt schematisch eine perspektivische Teilansicht der gegenüberliegenden Seite des Erntegutbehältnisses 17 in einer um 180° gedrehten Ansicht der als Mähdrescher 2 ausgeführten Arbeitsmaschine 1. Die Ansicht in Fig. 4 zeigt eine in Fahrtrichtung FR gesehen rechte Maschinenseite MR. Auf der rechten Maschinenseite MR ist schematisch ein Teil des Erntegutspeicherbehältnisses 17 dargestellt sowie ein Antriebsmittel 31 zum Antreiben der Querförderschnecken 18. Das Antriebsmittel 31 umfasst zumindest einen Hydraulikmotor 32, der durch eine Zuleitung mit der Hydraulikpumpe 30 auf der linken Maschinenseite ML verbunden ist. Mittels des zumindest einen Hydraulikmotors 32 ist ein stufenlos drehzahlveränderliches Antreiben der Querförderschnecke 18 möglich. Jede der beiden Querförderschnecken 18 ist in einem Schneckentrog 33 am Boden des Erntegutbehältnisses 17 angeordnet. Für eine bauraumsparende Ausführung ist vorgesehen, dass insbesondere nur ein Hydraulikmotor 32 zum Antreiben der Querförderschnecken 18 vorgesehen ist. Hierzu ist der Hydraulikmotor 32 zwischen den beiden Schneckentrögen 33 angeordnet. Eine Motorwelle 34 des Hydraulikmotors 32 erstreckt sich nach außen und treibt ein Antriebsritzel 36 einer als Kettentrieb ausgeführten Antriebsvorrichtung 35. Die als Kettentrieb ausgeführte Antriebsvorrichtung 35 umfasst weiterhin eine umlaufende Kette 37 sowie zwei Abtriebsritzel 38, die auf der jeweiligen Schneckenwelle der Querförderschnecken 18 angeordnet sind. Im dargestellten Fall des Kettentriebes 35 rotieren die Querförderschnecken 18 gleichsinnig. Durch zusätzliche Umlenkmittel ist es jedoch möglich, einen gegensinnigen Antrieb der Querförderschnecken 18 zu erreichen. Alternativ kann die Antriebsvorrichtung 35 als Riementrieb ausgeführt sein. Die als Riementrieb ausgeführte Antriebsvorrichtung 35 kann einen doppelseitigen Zahnriemen oder einen Sechskantverbundriemen als endlos umlaufendes Antriebselement umfassen.

In Fig. 4 ist eine perspektivische Ansicht des Erntegutbehältnisses 17 der Arbeitsmaschine 2 in Draufsicht dargestellt. Aus der Darstellung in Fig. 4 ist ersichtlich, dass die Querförderschnecken 18 auf ihrer dem Inneren des Erntegutspeicherbehältnisses 17 zugewandten Seite im Wesentlichen abdeckungsfrei ausgeführt sind. Oberhalb der jeweiligen Querförderschnecke 18 ist eine rohrförmige Strebe 39 im Wesentlichen achsparallel zur Schneckenwelle angeordnet. Diese Strebe 39 überdeckt die Querförderschnecke 18 lediglich partiell. Die Streben 39 weisen bevorzugt einen kreiszylindrischen Querschnitt auf. Denkbar ist aber auch eine Ausführung der Streben 39 mit einem polygonalen Querschnitt.

Die Inbetriebnahme des Förderschneckenantriebsstranges 24 führt dazu, dass die Hydraulikpumpe 30 ebenfalls angetrieben wird. Die Steuerungsvorrichtung 5 ist zur Ansteuerung der Hydraulikpumpe 30 und/oder des zumindest einen Hydraulikmotors 32 eingerichtet. Somit kann, um die Querförderschnecken 18 unabhängig vom Förderschneckenantriebsstrang 24 in Betrieb zu nehmen, vorgesehen sein, dass die Steuerungsvorrichtung 5 dazu eingerichtet ist, die vorzugsweise als Verstellpumpe ausgeführte Hydraulikpumpe 30 anzusteuern, dass diese zunächst keinen Volumenstrom fördert. Alternativ kann auch eine Ventilanordnung vorgesehen sein, welche einen von der alternativ als Konstantpumpe ausgeführten Hydraulikpumpe bereitgestellten Volumenstrom zunächst in einen Tank abführt, anstatt dem Hydraulikmotor 32 zuzuleiten. Eine weitere Alternative besteht darin, die Hydraulikpumpe 30 als Konstantpumpe auszuführen und den Hydraulikmotor 32 als Verstellmotor mit verstellbarem Schluckvolumen auszubilden. Auch auf diese Weise ließe sich eine zeitversetzte Ansteuerung des Förderschneckenantriebsstranges 24 mit der von diesem angetriebenen Hydraulikpumpe 30 und/oder des zumindest einen Hydraulikmotors 32 erreichen.

Durch die Einschaltverzögerung beim Antreiben der Querförderschnecken 18 gegenüber dem Förderschneckenantriebsstrang 24 des Auslaufrohrstranges 19 wird ein schonenderes Einschaltverhalten erreicht. Dabei fangen die Querförderschnecken 18 erst an zu fördern, wenn der Förderschneckenantriebsstrang 24 des Auslaufrohrstranges 19 bereits läuft. Auf diese Weise wird ein deutlich leichteres Anfahren nach einem Notstopp oder einer Blockade im Auslaufrohrstrang 19 erreicht. Die Steuerungsvorrichtung 5 ist dazu eingerichtet, zunächst den Förderschneckenantriebsstrang 24 zu aktivieren und dabei zugleich den Antrieb des Hydraulikmotors 32 temporär zu unterbinden. Nach einer vorgebbaren Zeitspanne wird von der Steuerungsvorrichtung 5 ein Steuerbefehl übermittelt, der die Hydraulikpumpe 30 und/oder den Hydraulikmotor 32 ansteuert, um die Querförderschnecken 18 anzutreiben. Bevorzugt sind in einer Speichereinheit der Steuerungsvorrichtung 5 ein oder mehrere Hochfahrprofile hinterlegbar, welche einen rampenförmigen Verlauf aufweisen. Die Hochfahrprofile sind vorzugsweise auf verschiedene Erntegutarten abgestimmt.

Weiterhin kann eine Ausschaltvoreilung der Querförderschnecken 18 gegenüber dem Auslaufrohrstrang 19 bewirkt werden. Die Steuerungsvorrichtung 5 ist dazu eingerichtet, zunächst den Antrieb der Querförderschnecken 18 abzuschalten, d.h. durch die Ansteuerung der Hydraulikpumpe 30 und/oder des Hydraulikmotor 32. Zeitlich versetzt hierzu wird der Förderschneckenantriebsstrang 24 durch eine entsprechende Ansteuerung mittels der Steuerungsvorrichtung 5 abgeschaltet. Hierdurch lässt sich ein nahezu vollständiges Leerfahren des Auslaufrohrstranges 19 erreichen, was zu einer Erleichterung beim Wiedereinschalten und zu einer Entlastung des Auslaufrohrstranges 19 führt.

Des Weiteren ist die Steuerungsvorrichtung 5 dazu eingerichtet sein, zumindest einen Vorgabewerte für eine Entleerrate des Entleersystems vorzugeben, wobei insbesondere der zumindest eine Vorgabewerte während des Entleervorgangs variierbar ist. Die stufenlose Veränderung (Reduzierung und Erhöhung) der Entleerrate für verschiedene Einsatzfälle innerhalb eines Einstelbereiches von Minimal- und Maximal-Vorgabewerten während des Entleervorgangs ist vorteilhaft, um eine Restbefüllung eines Überladefahrzeugs möglichst verlustfrei durchführen zu können. Ebenso lässt sich dadurch das Befüllen von Überladefahrzeug mit einem kleineren Volumen langsamer und gezielter durchführen. Dabei kann die Entleerrate auch während des laufenden Entleervorgangs durch den Fahrer verändert werden. Hierzu kann der Fahrer mittels der Eingabe- Ausgabe-Einheit 4 entsprechende Eingaben bzw. Vorgaben tätigen.

**Bezugszeichenliste**

| | | | |
|---|---|---|---|
| 1 | Arbeitsmaschine | 31 | Antriebsmittel |
| 2 | Mähdrescher | 32 | Hydraulikmotor |
| 3 | Fahrerkabine | 33 | Schneckentrog |
| 4 | Eingabe-Ausgabe-Einheit | 34 | Motorwelle |
| 5 | Steuerungsvorrichtung | 35 | Antriebsvorrichtung |
| 6 | Steuerleitung | 36 | Antriebsritzel |
| 7 | Vorsatzgerät | 37 | Kette |
| 8 | Schrägförderer | 38 | Abtriebsritzel |
| 9 | Dreschwerk | 39 | Strebe |
| 10 | Vorbereitungsboden | 40 | Antriebsmittel |
| 11 | Reinigungsvorrichtung | 41 | Abtriebsriemenscheibe |
| 12 | Siebebene | 42 | Riemen |
| 13 | Gebläseeinheit | 43 | Antriebsriemenscheibe |
| 14 | Abscheidevorrichtung | 44 | Schneckenwelle |
| 15 | Rücklaufboden | FR | Fahrrichtung |
| 16 | Förderelevator | ML | Linke Maschinenseite |
| 17 | Erntegutspeicherbehältnis | MR | Rechte Maschinenseite |
| 18 | Querförderschnecke | | |
| 19 | Auslaufrohrstrang | | |
| 20 | Vertikalrohr | | |
| 21 | Auslaufrohr | | |
| 22 | Förderschnecke | | |
| 23 | Achse | | |
| 24 | Förderschneckenantriebsstrang | | |
| 25 | Verteilergetriebe | | |
| 26 | Riemen | | |
| 27 | Vorgelegepunkt | | |
| 28 | Kettentrieb | | |
| 29 | Winkelgetriebe | | |
| 30 | Hydraulikpumpe | | |

## Patentansprüche

1. Entleersystem für eine landwirtschaftliche Arbeitsmaschine (1), umfassend:
- ein Erntegutspeicherbehältnis (17),
- zumindest eine innerhalb des Erntegutspeicherbehältnisses (17) angeordnete Querförderschnecke (18),
- einen Auslaufrohrstrang (19) mit einem unter einem Winkel zu der zumindest einen Querförderschnecke (18) geneigt angeordnetem Vertikalrohr (20) und einem sich an das Vertikalrohr (20) anschließenden Auslaufrohr (21), wobei in dem Auslaufrohrstrang (19) Förderschnecken (22) angeordnet sind, wobei zur Entleerung des Erntegutspeicherbehältnisses (17) den Förderschnecken (22) mittels der zumindest einen Querförderschnecke (18) im Erntegutspeicherbehältnis (17) befindliches Erntegut zugeführt wird,
- ein Antriebssystem zum stufenlos drehzahlveränderlichen Antreiben der zumindest einen Querförderschnecke (18), sowie
- eine Steuerungsvorrichtung (5) zur Ansteuerung des Antriebssystems,
**dadurch gekennzeichnet,**
- **dass** das Antriebssystem einen Förderschneckenantriebsstrang (24) zum Antreiben der Förderschnecken (22) im Auslaufrohrstrang (19) und ein Antriebsmittel (31) zum Antreiben der zumindest einen Querförderschnecke (18) umfasst, wobei der Förderschneckenantriebsstrang (24) und das Antriebsmittel (31) auf einander gegenüberliegenden Seiten des Erntegutspeicherbehältnisses (17) angeordnet sind, wobei auf der Seite des Förderschneckenantriebsstrangs (24) eine Hydraulikpumpe (30) angeordnet ist, welche das als zumindest einen Hydraulikmotor (32) umfassende Antriebsmittel (31) stufenlos drehzahlveränderlich antreibt.

2. Entleersystem nach Anspruch 1, **dadurch gekennzeichnet, dass** die zumindest eine Querförderschnecke (18) auf ihrer dem Inneren des Erntegutspeicherbehältnisses (17) zugewandten Seite im Wesentlichen abdeckungsfrei ausgeführt ist.

3. Entleersystem nach Anspruch 1 oder 2, **dadurch gekennzeichnet, dass** der zumindest eine Hydraulikmotor (32) mittels einer Antriebsvorrichtung (35) die zumindest eine Querförderschnecke (18) antreibt.

4. Entleersystem nach einem der Ansprüche 1 bis 3, **dadurch gekennzeichnet, dass** der Förderschneckenantriebsstrang (24) ein Verteilergetriebe (25) umfasst, welches durch einen Riemen (26) trieblich mit einem Vorgelegepunkt (27) verbunden ist, welcher die Förderschnecken (22) antreibt.

5. Entleersystem nach Anspruch 4, **dadurch gekennzeichnet, dass** der Vorgelegepunkt (27) mittels eines Kettentriebes (28) ein Winkelgetriebe (29) antreibt, welches die im Vertikalrohr (20) und Auslaufrohr (21) angeordneten Förderschnecken (22) antreibt.

6. Entleersystem nach einem der vorangehenden Ansprüche, **dadurch gekennzeichnet, dass** die Steuerungsvorrichtung (5) zur Ansteuerung der Hydraulikpumpe (30) und/oder des zumindest einen Hydraulikmotors (32) eingerichtet ist.

7. Entleersystem nach einem der vorangehenden Ansprüche, **dadurch gekennzeichnet, dass** die Steuerungsvorrichtung (5) zur voneinander unabhängigen Ansteuerung des Förderschneckenantriebsstranges (24) und der Hydraulikpumpe (30) und/oder des zumindest einen Hydraulikmotors (32) eingerichtet ist.

8. Entleersystem nach einem der vorangehenden Ansprüche, **dadurch gekennzeichnet, dass** die Steuerungsvorrichtung (5) zur zeitversetzten Ansteuerung des Förderschneckenantriebsstranges (24) und der Hydraulikpumpe (30) und/oder des zumindest einen Hydraulikmotors (32) eingerichtet ist.

9. Entleersystem nach einem der vorangehenden Ansprüche, **dadurch gekennzeichnet, dass** die Steuerungsvorrichtung (5) dazu eingerichtet ist, zumindest einen Vorgabewerte für eine Entleerrate vorzugeben, wobei insbesondere der zumindest eine Vorgabewerte während des Entleerungsvorganges variierbar ist.

10. Landwirtschaftliche Arbeitsmaschine (1) mit einem Entleersystem nach einem der vorangehenden Ansprüche, **dadurch gekennzeichnet, dass** die Arbeitsmaschine (1) als ein Mähdrescher (2) oder ein Überladewagen ausgeführt ist.

## Claims

1. An unloading system for an agricultural working machine (1), comprising:
- a harvested material storage container (17),
- at least one transverse screw conveyor (18) disposed inside the harvested material storage container (17),
- a discharge pipe conduit (19) with a vertical pipe (20) inclined at an angle to the at least one transverse screw conveyor (18) and a discharge pipe (21) connected to the vertical pipe (20), wherein screw conveyors (22) are disposed in the discharge pipe conduit (19), wherein, in order to unload the harvested material storage container (17), harvested material located in the harvested material storage container (17) is fed to the screw conveyors (22) by means of the at least one transverse screw conveyor (18),
- a drive system for driving the at least one transverse screw conveyor (18) in a continuously variable manner, as well as
- a control device (5) for controlling the drive system,
**characterized in that**
the drive system comprises a screw conveyor drive train (24) for driving the screw conveyors (22) in the discharge pipe conduit (19) and a drive means (31) for driving the at least one transverse screw conveyor (18), wherein the screw conveyor drive train (24) and the drive means (31) are disposed on opposite sides of the harvested material storage container (17), wherein, on the side of the screw conveyor drive train (24), a hydraulic pump (30) is disposed which drives the drive means (31) comprising at least one hydraulic motor (32) steplessly in a continuously variable manner.

2. The unloading system according to claim 1, **characterized in that** the at least one transverse screw conveyor (18) is configured so as to be substantially without a cover on its side facing the interior of the harvested material storage container (17).

3. The unloading system according to claim 1 or claim 2, **characterized in that** the at least one hydraulic motor (32) drives the at least one transverse screw conveyor (18) by means of a drive device (35).

4. The unloading system according to one of claims 1 to 3, **characterized in that** the screw conveyor drive train (24) comprises a distribution gear (25) which is operatively connected by means of a belt (26) to a reduction gear point (27) which drives the screw conveyors (22).

5. The unloading system according to claim 4, **characterized in that** the reduction gear point (27) drives an angular gear (29) by means of a chain drive (28), which angular gear drives the screw conveyors (22) disposed in the vertical pipe (20) and the discharge pipe (21).

6. The unloading system according to one of the preceding claims, **characterized in that** the control device (5) is configured to control the hydraulic pump (30) and/or the at least one hydraulic motor (32).

7. The unloading system according to one of the preceding claims, **characterized in that** the control device (5) is configured for mutually independent control of the screw conveyor drive train (24) and of the hydraulic pump (30) and/or of the at least one hydraulic motor (32).

8. The unloading system according to one of the preceding claims, **characterized in that** the control device (5) is configured for time-delayed control of the screw conveyor drive train (24) and of the hydraulic pump (30) and/or of the at least one hydraulic motor (32).

9. The unloading system according to one of the preceding claims, **characterized in that** the control device (5) is configured in a manner such as to specify at least one specified value for an unloading rate, wherein in particular, the at least one specified value can be varied during the unloading procedure.

10. An agricultural working machine (1) with an unloading system according to one of the preceding claims, **characterized in that** the working machine (1) is configured as a combine harvester (2) or as a transfer vehicle.

## Revendications

1. Système de vidage pour une machine de travail agricole (1), incluant :
- un contenant de stockage de produit récolté (17),
- au moins une vis d'amenée transversale (18) disposée à l'intérieur du contenant de stockage de produit récolté (17),
- une ligne tubulaire d'évacuation (19) avec un tube vertical (20) disposé de manière inclinée selon un angle par rapport à la au moins une vis d'amenée transversale (18) et avec un tube d'évacuation (21) raccordé au tube vertical (20), dans la ligne tubulaire d'évacuation (19) étant disposées des vis d'amenée (22), du produit récolté se trouvant dans le contenant de stockage de produit récolté (17) étant dirigé vers les vis d'amenée (22) au moyen de la au moins une vis d'amenée transversale (18) afin de vider le contenant de stockage de produit récolté (17),
- un système d'entraînement pour l'entraînement à vitesse de rotation progressivement variable de la au moins une vis d'amenée transversale (18), ainsi que
- un dispositif de commande (5) pour la commande du système d'entraînement,
**caractérisé en ce**
- **que** le système d'entraînement inclut une chaîne de transmission de vis d'amenée (24) pour entraîner les vis d'amenée (22) dans la ligne tubulaire d'évacuation (19) et un moyen d'entraînement (31) pour entraîner la au moins une vis d'amenée transversale (18), la chaîne de transmission de vis d'amenée (24) et le moyen d'entraînement (31) étant disposés sur des côtés opposés l'un à l'autre du contenant de stockage de produit récolté (17), sur le côté de la chaîne de transmission de vis d'amenée (24) étant disposée une pompe hydraulique (30) qui entraîne avec une vitesse de rotation progressivement variable le moyen d'entraînement (31) incluant au moins un moteur hydraulique (32).

2. Système de vidage selon la revendication 1, **caractérisé en ce que** la au moins une vis d'amenée transversale (18) est conçue sensiblement sans capot sur son côté tourné vers l'intérieur du contenant de stockage de produit récolté (17).

3. Système de vidage selon la revendication 1 ou 2, **caractérisé en ce que** le au moins un moteur hydraulique (32) entraîne la au moins une vis d'amenée transversale (18) au moyen d'un dispositif d'entraînement (35).

4. Système de vidage selon une des revendications 1 à 3, **caractérisé en ce que** la chaîne de transmission de vis d'amenée (24) inclut un boîtier de transfert (25) qui, par l'intermédiaire d'une courroie (26), est relié de manière motrice à un point de renvoi (27), lequel entraîne les vis d'amenée (22).

5. Système de vidage selon la revendication 4, **caractérisé en ce que** le point de renvoi (27) entraîne, par l'intermédiaire d'une propulsion à chaîne (28), un engrenage angulaire (29), lequel entraîne les vis d'amenée (22) disposées dans le tube vertical (20) et le tube d'évacuation (21).

6. Système de vidage selon une des revendications précédentes, **caractérisé en ce que** le dispositif de commande (5) est agencé pour commander la pompe hydraulique (30) et/ou le au moins un moteur hydraulique (32).

7. Système de vidage selon une des revendications précédentes, **caractérisé en ce que** le dispositif de commande (5) est agencé pour la commande mutuellement indépendante de la chaîne de transmission de vis d'amenée (24) et de la pompe hydraulique (30) et/ou du au moins un moteur hydraulique (32).

8. Système de vidage selon une des revendications précédentes, **caractérisé en ce que** le dispositif de commande (5) est agencé pour la commande différée de la chaîne de transmission de vis d'amenée (24) et de la pompe hydraulique (30) et/ou du au moins un moteur hydraulique (32).

9. Système de vidage selon une des revendications précédentes, **caractérisé en ce que** le dispositif de commande (5) est agencé pour prescrire au moins une valeur de prescription pour un rythme de vidage, en particulier la au moins une valeur de prescription pouvant être variable durant l'opération de vidage.

10. Machine de travail agricole (1) comprenant un système de vidage selon une des revendications précédentes, **caractérisée en ce que** la machine de travail (1) est conformée en moissonneuse-batteuse (2) ou en benne.
